# EUROPEAN PATENT APPLICATION

(11) **EP 4 624 016 A1**
(43) Date of publication of application: **01.10.2025**
(21) Application number: 24166796.3
(22) Date of filing: 27.03.2024
(51) Int. Cl.: B01D 24/00, B01D 46/58, B01D 46/62

(54) **MOUNTING ASSEMBLY FOR A FILTER DEVICE WITH A CONNECTING ELEMENT**

(71) Applicant: AAF LTD., Cramlington, Northumberland NE23 8AF (GB)
(72) Inventor: Smith, Mark, Whitley Bay NE25 0PU (GB); White, John, Northumberland NE22 7EN (GB); Turnbull, Graeme Denton, Northumberland NE638JQ (GB)
(74) Representative: Haseltine Lake Kempner LLP

(57) **Abstract**

The present invention relates to a mounting assembly for a filter device comprising a mounting element, at least one first filter element being fixed to the mounting element by means of a first connecting element, and at least one second filter element being arranged adjacent to the first filter element, wherein the first connecting element is to be covered by locating the second filter element to the mounting element.

## Description

### Field of the invention

The present invention relates to a mounting assembly for a filter device comprising a mounting element, at least one first filter element being fixed to the mounting element by means of a first connecting element, and at least one second filter element being arranged adjacent to the first filter element.

### Background of the invention

State-of-the-art filter devices are arranged, for example, in front of a gas turbine in order to clean fluid which is sucked into the gas turbine. There are blades arranged in the gas turbine, which need to be protected against dust, solids, free water and salt. Even if only very small solids enter the gas turbines, huge damage might be caused. Hence, highest demands are applied on the filter devices. For this purpose, the filter devices include mounting assemblies. By means of the mounting assemlies filter elements, such as the first filter element and the second filter element, are mounted to the filter device. Each of the filter elements has a filter medium held by a frame element. The fluid flows through the filter medium and is thereby cleaned. The mounting element is any element in the filter device to which arbitrary components, here specifically the first filter element, are to be attached. The first filter element is thereby attached by means of the first connecting element, which is an arbitrary attaching element.

In rare cases, it could happen that connecting elements detach from the filter device and are sucked into the gas turbine, which might have the consequences mentioned above.

It is therefore an object of the present invention to improve the mounting assemblies and to make the filter devices more reliable.

### Summary

To achieve the above objects, according to one aspect of the present invention there is provided a mounting assembly for a filter device comprising a mounting element, at least one first filter element being fixed to the mounting element by means of a first connecting element, and at least one second filter element being arranged adjacent to the first filter element, wherein the first connecting element is to be covered by locating the second filter element at the mounting element.

To be covered by locating the second filter element means that the first connecting element is concealed due to the placement of the second filter element at the mounting element, preferably by any component necessary to place the second filter element adjacent ot the first filter element. As a result, the first connecting element may not depart from the first filter element and thus the gas turbine cannot be damaged or destroyed by a sucked connecting element.

According to a preferred embodiment of the invention the first connecting element is to be covered by means of the second filter element itself. It means that the second filter element is to be placed at the mounting element so as to overlap the first filter element at the position where the first connecting element is arranged.

Consequently, no additional components for covering or securing the first connecting element are needed, which saves material and costs, as well as effort. Moreover, the overall stability of the filter devices increases, because the filter elements, here in particular the first and the second filter elements, support each other. In this embodiment, the second filter thus fulfills a dual function. On the one hand, it filters fluid, on the other hand it protects the neighboring first filter element from the loss of its connecting element.

Preferably, the first filter element has a first frame element and the second filter element has a second frame element, whereby the first frame element is provided with the first connecting element, which is to be retained in the first frame element on the side facing the second frame element and to be covered by means of the second frame element. The first and the second frame elements are particularly stable parts of the first and the second filter elements. By means of the second frame element, the first connecting element is thus particularly well protected, even if the first connecting element is pressed forcefully against the second filter element.

According to a further aspect of the invention the second filter element is to be fixed to the first filter element. Positions on the mounting element to which filter elements, here in particular the first filter element, are to be attached with connecting elements, are hereinafter referred to as attachment points. If the second filter element is fixed to the first filter element, no separate attachment point is needed on the mounting element.

The advantage is that thus the number of attachment points on the mounting element is minimised while the first connecting element is covered. In addition, since the filter elements are replaceable, they may be easily adjusted to each other at any time. Such an adjustment is the more simplified the less attachment points are to be considered. Therefore, in addition to saving of material and costs, the overall structure of the filter device is simplified.

Advantageously, the connecting element is to be covered such that it is inseparable linked to the first filter element. Inseparable means that the connection element is not removable from the first filter element, even if the first filter element is dismounted from the filter device. In other words, the connecting element has an additional safety device against the loss, wherein the connecting element after release preferably remains captive in an associated component. Such an associated component is preferably a hollow body installed in the first filter element. In this way, the connecting element is even better protected against loss.

In addition, the mounting of the first filter element is facilitated, because the necessary connecting element is already in position.

Further preferred, the first connecting element is to be covered such that it is undetachable linked to the mounting assembly. Undetachable linked means that the first connecting element is prevented from accidental loss. Thus, the first connecting element is not unintentionally releasable from the filter device. Even if the first connecting element is released from the first filter element, it is still not lost. Preferably it is captured by the second filter element. Thus, the protection against the loss of the first connecting element is further improved. Furthermore, even if all security measures, such as a locking ring or an adhesive, taken directly on the first filter element fail, the first connecting element is still not lost.

In a further embodiment of the invention the second filter element is provided with a gasket, which is to be in a short distance with the first connecting element. In a short distance means that the first connecting element is at least very close to the gasket. Thereby, the gasket fulfils a dual function, on the one hand, it prevents a flow of fluids outside designated channels, on the other hand, it holds the connecting element firmly in position. This reduces the risk that the first connecting element will become loose.

In an advantageous improvement of the invention the first connecting element is formed as a removable connecting element, preferably as a screw. The removable connecting element such as a screw is a common and easily available means for securing components together. The first connecting element must be removable from the filter device to replace filter elements such as the first filter element. It is clearly intended to use removable connecting elements that are easily replaceable and not to be lost. There are also irremovable connecting elements available, but removable connecting elements are more advantageous here. Although this has the disadvantage that such a connecting element is sometimes also unintentionally removable, but this problem is overcome by means of the second filter element according to the invention, which covers the first connecting element.

According to another aspect of the invention, the mounting assembly further comprises a third filter element with a third frame element and a second connecting element, which is to be retained in the third frame element on the side facing the second frame element and also to be covered by means of the second frame element. The second connecting element is preferably identically formed as the first connecting element, and the third filter element is preferably identically formed as the first filter element. The second filter element is thus used as an intermediate component in order to secure the connecting elements of the first and the third filter elements. Thus, the efficency of the second filter element as a covering protection device is significantly increased.

Further preferred, the mounting element has an elongated and straight form and the first filter element further comprises a second connecting element, whereby several first filter elements and second filter elements are to be located alternately along the mounting element, and each second filter element, on which two adjacent first filter elements are arranged, is intended to cover the first connecting element of one first filter element and the second connecting element of another first filter element. To be located alternately means that along the mounting element, for example, initially a first filter element, then a second filter element and then again a first filter element are arranged, and so on. Thus, each first filter elment has only second filter elements as adjacent filter elements and vice versa. Thus, a filter bank is created, in which all connecting elements are efficiently covered and thus secured from loss.

Moreover, other embodiments are possible, which make the mounting assembly even more efficient or supplement it with alternative solutions.

Therefore, it is proposed that the first connecting element advantageously protrudes into the second filter element. Protruding means that the first connecting element is not only covered by the second filter element, but also that a part of the first connecting element, for example the head of a screw, extends into the second filter element. As a result, an edge or outer circumference of the extending part can be gripped around. By gripping a torque acts, and the first connecting element is thus particularly protected against loss.

In another advantageous embodiment, the first connecting element is countersunk in the first filter element. Countersunk means that the first connecting element either terminates at one end planar with a surface of the first filter element facing the second filter element or is located with this end inside the first filter element. The advantage of this embodiment is that the second filter element is particularly easy to arrange on the first filter element.

### Brief description of the drawings

The invention will now be described in greater detail, by way of example, with reference to schematic drawings, in which:
- Fig. 1: is a side view of a fluid channel with a gas turbine and a filter device,
- Fig. 2: is a perspective view of the detail II in Fig. 1,
- Fig. 3: is a perspective view of a mounting assembly according to the present invention represented by three filter elements,
- Fig. 4: is a partial view of a section taken along line IV - IV in Fig. 3,
- Fig. 5: is a partial view of a section taken along line V - V in Fig. 4, and
- Fig. 6: is a partial view of a section taken along line VI - VI in Fig. 4.

### Detailed description of the invention

The present invention will be described now more fully hereinafter. This invention may, however, be embodied in many different forms and should not be construed as limited to the embodiments set forth herein; rather, these embodiments are provided so that this disclosure will be thorough and complete, and will fully convey the scope of the invention to those skilled in the art.

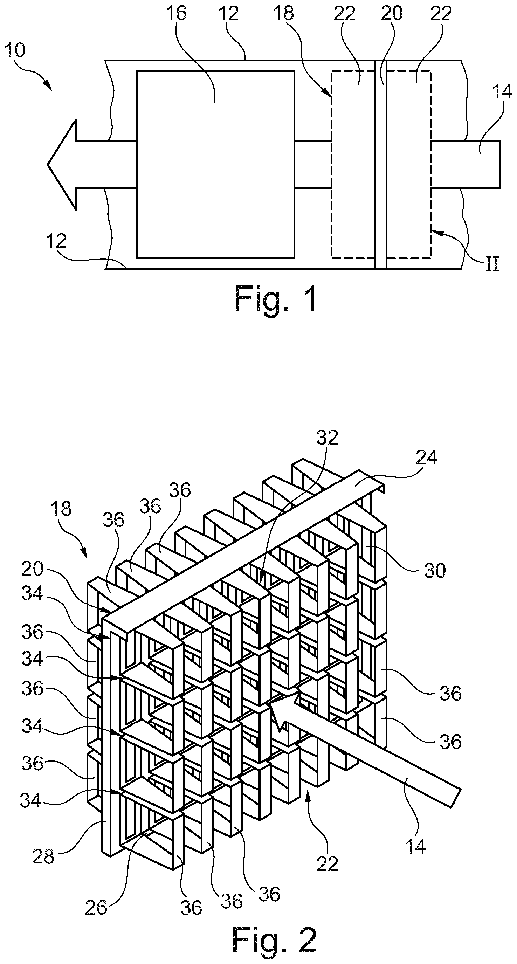

Fig. 1 depicts a fluid channel 10, which is enclosed by a channel wall 12 and through which an fluid flows in a flow direction 14. The flow direction 14 is indicated by an arrow. In the fluid channel 10, a gas turbine 16 and a filter device 18 are provided, wherein the filter element 18 is arranged with respect to the flow direction 14 in front of the gas turbine 16. The filter device 18 includes a filter device frame 20 and a filter elements area 22.

The filter device 18 is intended to clean the fluid while flowing through the filter device 18, before the fluid flows through the gas turbine 16. Thus, the filter element 18 protects the gas turbine 16 against damage by any solids that may be contained in the previously uncleaned fluid.

Fig. 2 depicts detail II of Fig. 1, which is the filter device 18 with the filter device frame 20 and the filter elements area 22. The filter device frame 20 includes an upper frame bar 24, a lower frame bar 26, a first side frame bar 28 and a second side frame bar 30. Within the filter device frame 20, a mounting assembly 32 according to the invention is arranged, which is shown in detail in further figures.

From the first side frame bar 28 to the second side frame bar 30 and parallel to the upper and lower frame bars 24, 26, several stacked mounting elements 34 extend. Thus, the mounting elements 34 are formed as cross members. In the filter elements area 22 several filter elements 36 are arranged. The filter elements 36 are positioned next to each other along the mounting elements 34, whereby the filter elements 36 extend from the mounting elements 34 alternately in the flow direction 14 and against the flow direction 14.

For simplicity and clarity, the filter elements 36 are shown without filter media. In fact, filter media are inserted at these sides of each filter element 36, which are shown fully open and substantially parallel to the flow direction 14. On the sides, which are arranged crosswise to the flow direction, no filter media are arranged.

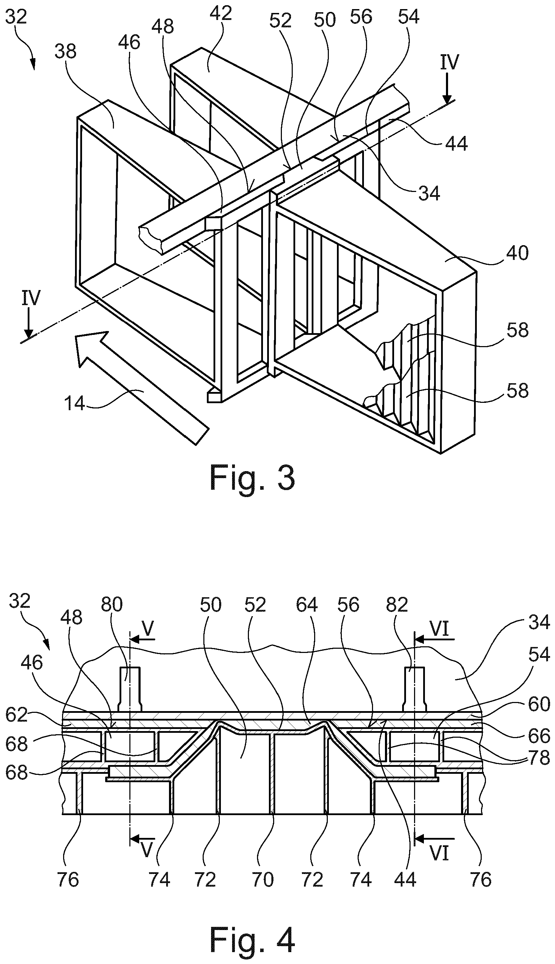

Fig. 3 depicts the mounting assembly 32 of the invention represented by three filter elements 38, 40, 42, more precisely by a first filter element 38, a second filter element 40 and a third filter element 42. Theses filter elements 38, 40, 42 are attached to a mounting surface 44 of the mounting element 34.

The first filter element 38 contains a first frame element 46 with a first contact surface 48. Thereby, the first filter element extends from the first frame element 46 in the flow direction 14. The second filter element 40 contains a second frame element 50 with a second contact surface 52. Thereby, the second filter element 40 extends from the second frame element 50 against the flow direction 14. The third filter element 42 contains a third frame element 54 with a third contact surface 56. Thereby, and similar to the first filter element 38, the third filter element 42 extends from the third frame element 54 in the flow direction 14.

The contact surfaces 48, 52, 56 of the frame elements 46, 50, 54 are docked to the mounting surface 44 and arranged adjacent to each other. More specifically, the first and the third frame elements 46, 54 are arranged adjacent to the second frame element 50, which is located essentially between the first and the third frame elements 46, 54.

The filter elements 38, 40, 42 each have two sides, here two equal and open sides, which are in fact closed by means of filter media 58, preferably folded filter media, as indicated for the second filter element 40. For a better insight, the filter elements 38 and 42 are shown without the filter media 58.

The fluid flows substantially in the flow direction 14 and through the filter media 58 of the frame elements 46, 50, 54. Thereby, the fluid is cleaned and rid of any solids.

Fig. 4 depicts the partial view of the section taken along line IV - IV in Fig. 3. As already visible in Fig. 3, the three frame elements 46, 50, 54 are docked to the mounting element 34, more precisely with their contact surfaces 48, 52, 56 to the mounting surface 44 of the mounting element 34. The mounting surface 44 is located on a mounting wall 60 of the mounting element 34, more precisely on the outer side of the mounting wall 60.

In addition, several gaskets 62, 64, 66 are arranged both between the mounting wall 60 and the frame elements 46, 50, 54 and between the frame elements 46, 50, 54 themselves. Specifically, there are arranged a first gasket 62 between the mounting wall 60 and the first frame element 46, a second gasket 64 between the mounting wall 60 and the second frame element 50, and a third gasket 66 between the mounting wall 60 and the third frame element 54. Further, the second gasket 64 extends partially into the intermediate areas of the second frame element 50 to the adjacent first and third frame elements 46, 54. By means of the gaskets 62, 64, 66, the mounting assembly 32 is particularly well sealed and stabilised.

For further stabilisation, various support members 68, 70, 72, 74, 76, 78 are arranged within the frame elements 46, 50, 54, in particular support members 68 in the first frame element 46, support members 70, 72, 74, 76 in the second frame element and support members 78 in the third frame element.

Two sleeves 80, 82 are visible on the inner side of the mounting wall 60, with the first sleeve 80 protruding there from the mounting wall 60, where the first frame element 46 is arranged on the outer side of the mounting wall 60. Likewise, a second sleeve 82 protrudes there from the mounting wall 60, where on the outer side of the mounting wall 60 the third frame element 54 is arranged.

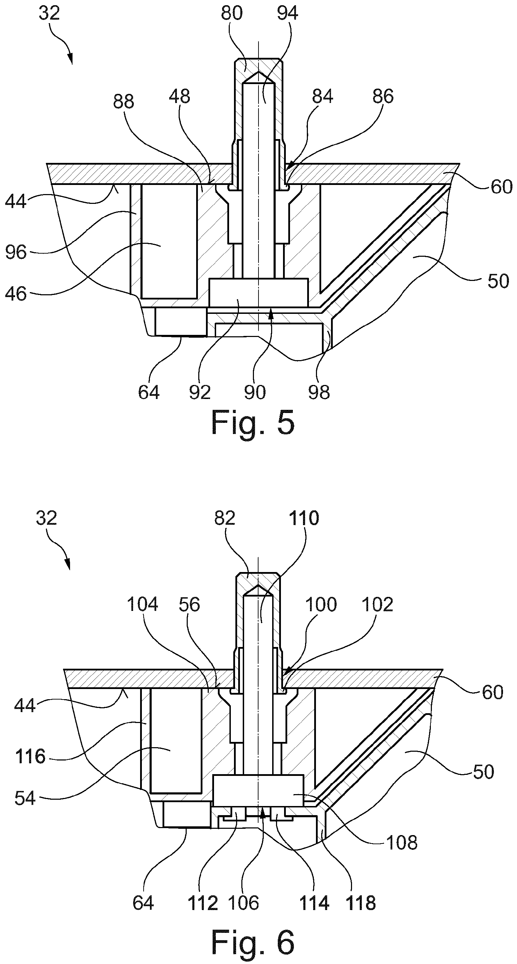

Fig. 5 depicts the partial view of the section taken along line V - V in Fig. 4. Already known from Fig. 3 and Fig. 4 are the adjacent frame elements 46 and 50, whereby in the shown section the first frame element 46 is arranged with its first contact surface 48 on the mounting surface 44 of the mounting wall 60. Also the second gasket 64 is again visible, arranged between the frame elements 46 and 50.

The mounting wall 60 has a plug opening 84 through which the first sleeve 80 is inserted from the mounting surface 44, so that the first sleeve 80 protrudes from the other or inner side of the mounting wall 60, as already visible in Fig. 4. The first sleeve 80 is held by means of a sleeve collar 86 in the plug opening 84. Surrounding the sleeve collar 86 and located on the mounting surface 44 a first connector housing 88 is provided. In the first connector housing 88 a first connecting element 90 is arranged, formed as a screw with a screw head 92 and a screw bolt 94. The screw head 92 is located on a side of the connector housing 88 facing the second frame element 50. The screw bolt 94 extends from the screw head 92 through the connector housing 88 into the first sleeve 80. For stabilisation, the first frame element 46 contains a support member 96 and the second frame element 50 contains a support member 98.

The first sleeve 80 is plugged into the plug opening 84 such that the first connecting element 90 is only from the side of the mounting surface 44 attachable to the mounting wall 60. The connector housing 88 is formed such that the first connecting element 90 is completely countersunkable including the srew head 92 in the first frame element 46. The second frame element 50 is located at the first frame element 46 on the side of the countersunk screw head 92 and covers thus the first connecting element 90. As a result, the second frame element 50 prevents an unintentional detachment of the first connecting element 90 from the first frame element 46.

Fig. 6 depicts the partial view of the section taken along line VI - VI in Fig. 4. Already known from Fig. 3 and Fig. 4 are also the adjacent frame elements 50 and 54, whereby the shown section of the third frame element 54 is arranged with the third contact surface 56 on the mounting surface 44 of the mounting wall 60.

Here the mounting wall 60 has a plug opening 100 through which the second sleeve 82 is inserted from the mounting surface 44, so that the second sleeve 82 protrudes from the other side of the mounting wall 60, as already visible in Fig. 4.

The second sleeve 82 is held by means of a sleeve collar 102 in the plug opening 100. Surrounding the sleeve collar 102 and located on the mounting surface 44 a second connector housing 104 is provided. In the second connector housing 104 a second connecting element 106 is arranged, here again a screw with a screw head 108 and a screw bolt 110. The screw bolt 110 extends from the screw head 108 through the connector housing 104 into the second sleeve 82. One special feature of the second connecting element 106 is that the screw head 108 prortudes slightly out of the third frame element 54 and contacts thereby the second gasket 64. Another special feature is that on the screw head 108 a first grip tooth 112 and a second grip tooth 114 are arranged, which protrudes into the second frame element 50. For stabilisation, the third frame element 54 contains a support member 116 and the second frame element 50 contains a support member 118.

Analogous to Fig. 5, the second sleeve 82 is plugged into the plug opening 102 such that the second connecting element 106 is only from the side of the mounting surface 44 attachable to the mounting wall 60. However, the connector housing 104 is formed such that the second connecting element 106 is not completely countersunkable into the third frame element 54. Therefore, as already mentioned above, the screw head 108 protrudes out of the third frame element 54. The second frame element 50 is located at the third frame element 46 on the side of the protruding screw head 108 and covers thus the second connecting element 106, whereby the screw head 108 contacts the second gasket 64. As a result, a torque acts on the edge or the circumference of the screw head 108, and thus the second connecting element 106 is not so easy to turn or loosen.

Furthermore, by means of the gripping teeth 112 and 114, which extend from the screw head 108 into the second frame element 50, a rotation of the second connecting element 106 is completely prevented. Thus the second connecting element 106 is both covered and certainly protected against loosening.

The previous detailed description has been provided for the purposes of illustration and description. Thus, although there have been described particular embodiments of the present invention of a new and useful gasket assembly, it is not intended that such references be constructed as limitations up-on the scope of this invention except as set forth in the following claims.

### List of reference signs

- 10: fluid channel
- 12: channel wall
- 14: flow direction
- 16: gas turbine
- 18: filter device
- 20: filter device frame
- 22: filter elements area
- 24: upper frame bar
- 26: lower frame bar
- 28: side frame bar
- 30: side frame bar
- 32: mounting assembly
- 34: mounting element
- 36: filter element
- 38: filter element
- 40: filter element
- 42: filter element
- 44: mounting surface
- 46: frame element
- 48: contact surface
- 50: frame element
- 52: contact surface
- 54: frame element
- 56: contact surface
- 58: filter medium
- 60: mounting wall
- 62: gasket
- 64: gasket
- 66: gasket
- 68: support member
- 70: support member
- 72: support member
- 74: support member
- 76: support member
- 78: support member
- 80: sleeve
- 82: sleeve
- 84: plug opening
- 86: sleeve collar
- 88: connector housing
- 90: connecting element
- 92: screw head
- 94: screw bolt
- 96: support member
- 98: support member
- 100: plug opening
- 102: sleeve collar
- 104: connector housing
- 106: connecting element
- 108: screw head
- 110: screw bolt
- 112: grip tooth
- 114: grip tooth
- 116: support member
- 118: support member

## Claims

1. A mounting assembly (32) for a filter device (18) comprising:
a mounting element (34), at least one first filter element (38) being fixed to the mounting element (34) by means of a first connecting element (90), and at least one second filter element (40) being arranged adjacent to the first filter element (38),
**characterised in that** the first connecting element (90) is to be covered by locating the second filter element (40) at the mounting element (34).

2. The mounting assembly (32) according to claim 1,
wherein the first connecting element (90) is to be covered by means of the second filter element (40) itself.

3. The mounting assembly (32) according to claim 1 or 2,
**characterised in that** the first filter element (38) has a first frame element (46) and the second filter element (40) has a second frame element (50), whereby the first frame element (46) is provided with the first connecting element (90), which is to be retained in the first frame element (46) on the side facing the second frame element (50) and to be covered by means of the second frame element (50).

4. The mounting assembly (32) according to one of claims 1 to 3,
**characterised in that** the second filter element (40) is to be fixed to the first filter element (38).

5. The mounting assembly (32) according to one of claims 1 to 4,
**characterised in that** the first connecting element (90) is to be covered such that it is inseparable linked to the first filter element (38).

6. The mounting assembly (32) according to one of claims 1 to 5,
**characterised in that** the first connecting element (90) is to be covered such that it is undetachable linked to the mounting assembly (32).

7. The mounting assembly (32) according to one of claims 1 to 6,
**characterised in that** the first connecting element (90) is formed as a removable connecting element, preferably as a screw.

8. The mounting assembly (32) according to one of claims 1 to 7,
**characterised in that** the mounting assembly (32) further comprises a third filter element (42) with a third frame element (54) and a second connecting element (106), which is to be retained in the third frame element (54) on the side facing the second frame element (50) and also to be covered by means of the second frame element (50).

9. The mounting assembly (32) according to one of claims 1 to 8,
**characterised in that** the mounting element (34) has an elongated and straight form and the first filter element (38) further comprises a second connecting element (106), whereby several first filter elements (38) and second filter elements (40) are to be located alternately along the mounting element, and each second filter element (40), on which two adjacent first filter elements (38) are arranged, is intended to cover the first connecting element (90) of one first filter element (38) and the second connecting element (106) of another first filter element (38).
